# EUROPEAN PATENT APPLICATION

(11) **EP 0 962 177 A1**
(43) Date of publication of application: **08.12.1999**
(21) Application number: 98830352.5
(22) Date of filing: 05.06.1998
(51) Int. Cl.: A47J 27/12, A47J 36/16

(54) **Spacing device for kitchen utensils intended for cooking food**

(71) Applicant: SILGA S.p.A., 20090 Buccinasco (Milano) (IT)
(72) Inventor: Garavaglia, Fulvio Luigi, 20144 Milano (IT)
(74) Representative: Sutto, Luca

(57) **Abstract**

A spacing device for kitchent utensils intended for cooking food is provided, in which the support body (2) has a first coupling portion (3) intended for removable engagement with a first cooking utensil (4) and a second coupling portion (7) intended for removable engagement with a grip element (8) of the second kitchen utensil (9). The device is capable, under engagement conditions of the coupling portions with the utensils, of keeping a predetermined distance (H) between a bottom wall of the first utensil (4) and a bottom wall of the second utensil (9), so as to ensure dripping of the liquids used for food cooking contained in the second utensil.

## Description

The present invention relates to a spacing device for kitchen utensils intended for cooking food.

It is known that there are on the market several sets of kitchen utensils used for cooking food and consisting of a predetermined number of pots and saucepans.

In particular, use of two cooking utensils one of which, under operating conditions, is at least partly inserted into the other, is known. The inner pan is provided, at least on its base wall, with communication holes enabling passage of a liquid.

A coupling thus conceived, once the desired cooking stage has been reached, enables the inner pan to be withdrawn carrying out draining of the liquids such as oil or water contained therein, which liquids have been either used for cooking or generated as a result of cooking itself.

In the most recent years also widely spread are utensils for cooking food, to the holding body of which grid baskets arranged to contain foodstuffs to be submitted to steam cooking for example or to cooking by frying can be engaged using different hooking systems. In particular grid baskets have spacing elements that are hinged at one end thereof to a basket edge, so that for this reason they are movable in rotation about the hinge axis.

At their other end the spacing elements have engagement portions capable of being coupled with a side wall of the basket-containing pan.

To carry out frying, the basket is fitted into the pan and the spacing elements are positioned in such a manner that they do not interfere with said basket. Once the desired cooking stage has been reached, baskets of the type briefly described above are lifted so that the fried food is moved away from the oil held in the pan bottom, the spacing elements are rotated and the second ends are connected to the pan side wall so that a given distance is maintained between the basket and the oil enabling food dripping and removal off said food from the pan.

However, the above described grid containers have proved not to be very versatile because substantially they are only adapted for frying operations. In addition, due to the grid structure and the presence of the movable spacing elements bringing about the presence of hinges and coupling portions, these baskets have problems in terms of washability which greatly reduces a practical use of them.

In addition, it is apparent that due to a fixed connection with the basket, the spacing elements are subjected to strong heating during cooking and some precaution is therefore needed in manipulating them, when, cooking being over, it is necessary to bring them to an operating condition.

A further drawback is then due to an increase in the basket bulkiness which is disadvantageous both during use of the kitchen utensil and when one wishes to rationally stow the utensil in a cupboard.

Under this situation, it is a fundamental object of the present invention to substantially obviate all drawbacks typical off the above described articles. In particular, it is a main object of the invention to provide a spacing device for kitchen utensils intended for cooking food which enables the overall bulkiness of pots and pans not to be increased and which has improved features in terms of practical use.

It is a further object of the invention to create a device highly safe in operation, in particular with reference to protection from heat and steadiness of the pans when assembled.

It is a further object of the invention to provided a spacing device adapted for use with pans equipped with handles that are already on the market.

The foregoing and further objects that will become more apparent in the progress of the present description are substantially achieved by a spacing device for kitchen utensils intended for cooking food in accordance with the features recited in the appended claims.

Further features and advantages will become more apparent from the following detailed description of a preferred embodiment given by way of non-limiting example, with reference to the accompanying drawings, in which:
- Fig. 1 is a front view of a spacing device for kitchen utensils in accordance with the present invention;
- Fig. 2 is a front view of a second embodiment of the device in accordance with the invention;
- Fig. 3 is a plan view of the device referred to in Fig. 1;
- Fig. 4 is a side view of the device referred to in Fig. 1;
- Fig. 5 is a plan view of the device shown in Fig. 2;
- Fig. 6 is a side view of the device shown in Fig. 2;
- Fig. 7 is a plan view of a third embodiment in accordance with the invention;
- Fig. 8 is a side view of the device shown in Fig. 7.

With reference to the drawings, a spacing device for kitchen utensils intended for cooking food in accordance with the present invention has been generally identified by reference numeral 1.

The device consists of a support body 2 having a first coupling portion 3 intended for removably engaging with a first cooking utensil 4. Preferably this portion 3 is connected at least with one grip element 5, or handle, radially projecting from the side wall 6 of the first kitchen utensil 4.

The support body 2 is also provided with a second coupling portion 7 intended for engagement, in a removable manner too, with at least one grip element 8 of a second kitchen utensil 9.

Once the spacer has been brought into engagement with the utensils, said spacer is capable of keeping a predetermined distance H from a bottom wall 21 of the first utensil 4 and a bottom wall 22 of the second utensil 9.

The second utensil 9 is generally held, during the cooking step, at least partly within the first utensil 4 and its bottom wall (and optionally its side wall too) has appropriate through holes for maintaining the two pans into fluid communication.

Distance H maintained through the spacing device is generally capable of ensuring lifting of the perforated bottom wall 22 to such an extent that dripping of the oil or other cooking fluid and consequent separation of the liquid from the food contained in the second utensil is ensured.

At all events it is to note that even in the dripping condition the second utensil 9 stays at least partly within the first utensil 4.

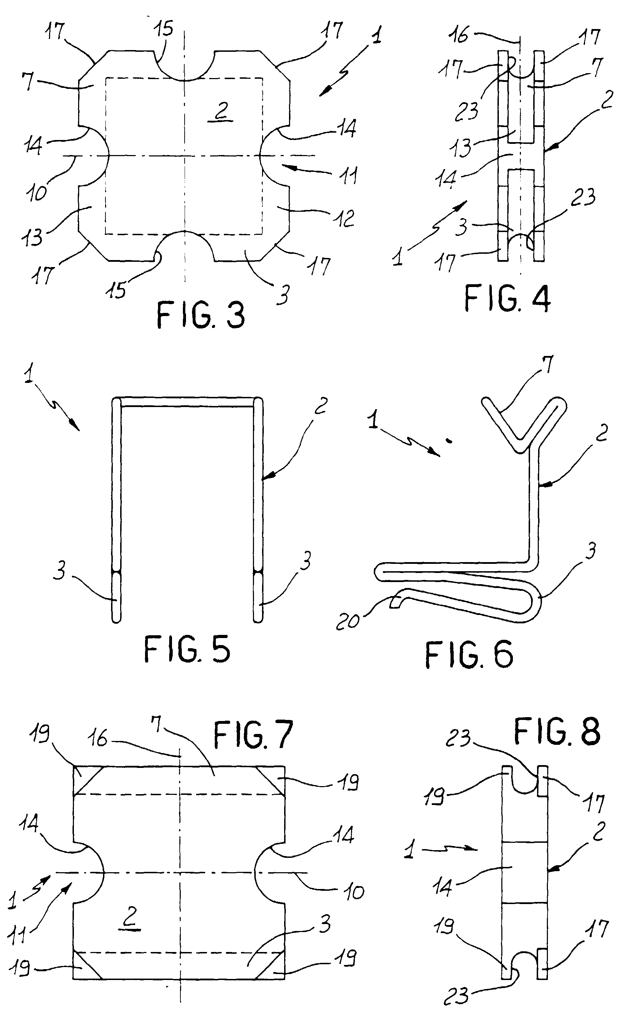

In a first embodiment the support body 2 has a substantially rectangular profile and in a preferred embodiment it is of a square conformation (see Figs. 3 and 7).

The first and second coupling portions 3, 7 are disposed at the opposite sides of the support body 2 and are defined by respective housings 23 the shape of which matches that of a rest portion 24, 25 of the corresponding grip element.

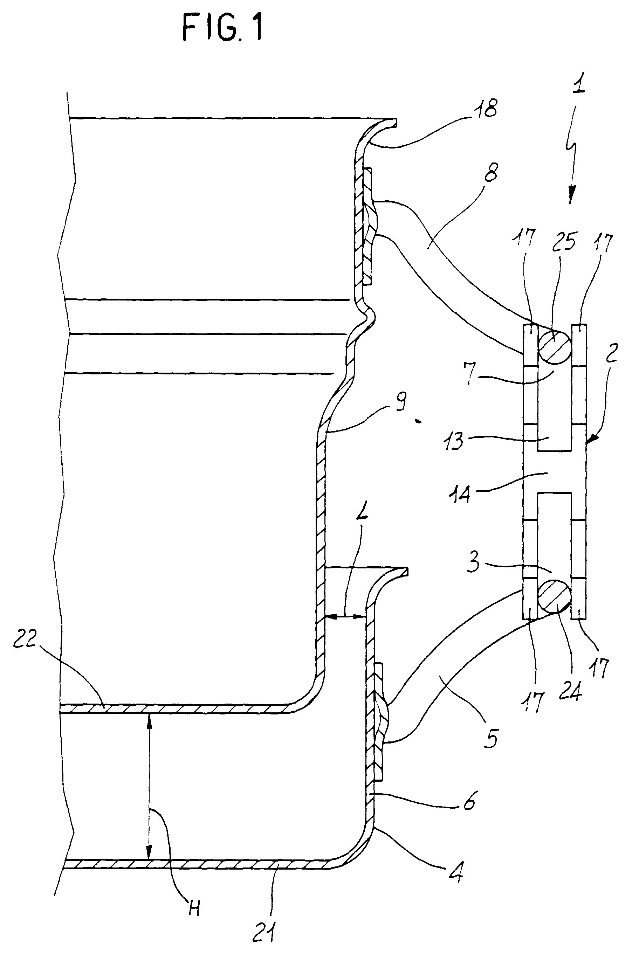

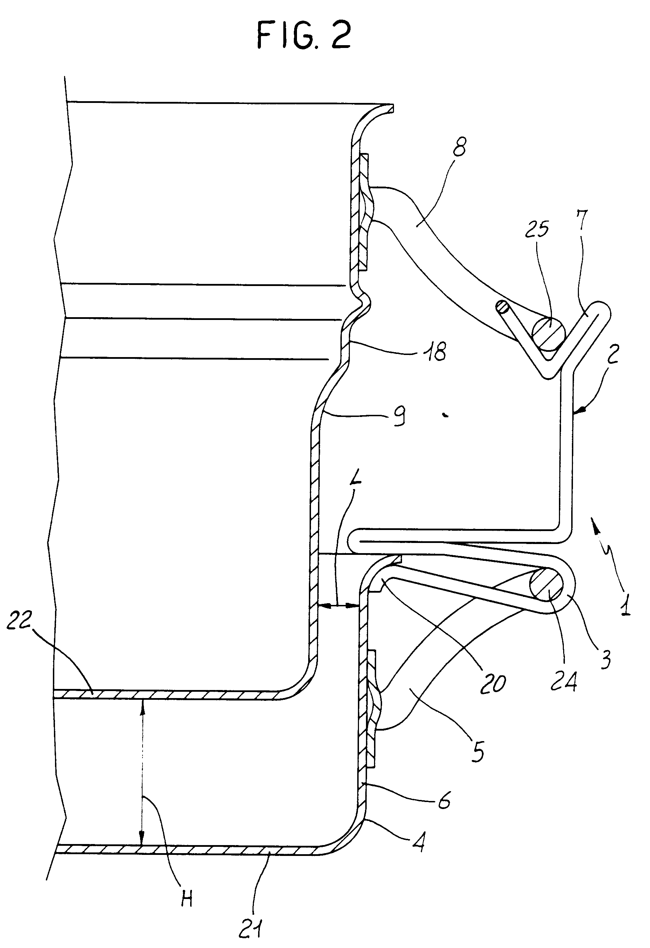

Preferably the grip elements 5, 8 of the two utensils 4, 9 are identical with each other and are joined to the side wall of the respective utensils in such a manner that they show a converging configuration when the second utensil is held in the first one (see Figs. 1 and 2).

This particular type of arrangement enables the respective rest portions 24, 25 of the grip elements to be at a minimum distance from each other so that a substantial reduction is achieved in the bulkiness of the spacing device enabling an optimal distance to be maintained between the utensil bottoms.

The rest portions of handles 5, 8 are defined by the rectilinear length of the handle material enabling the utensil to be hand-gripped by a user. These rest portions are generally of circular section, as shown in Fig. 1.

Housings 23 of the coupling portions 3, 7 are consequently delimited by a semi-circular profile, seen in section, the shape of which enables them to match with said rest portions.

In addition, the grip elements of the two utensils being identical, the first and second coupling portions 3, 7 are consequently equal to each other and disposed symmetrically relative to a median axis 10 of the support body. This axis is disposed horizontally in a condition in which the coupling portions 3,7 are in engagement with the utensils.

Due to their being identical and to the perfect symmetry in their arrangement on the support body 2, both the first and second coupling portions can be used indistinctly for coupling with the first or second utensil 4, 9.

In order to ensure the best steadiness and best support, housings 23 defined by the coupling portions extend longitudinally over the whole length of the side of the support body 2.

The device also comprises grip means 11 defined by at least two opposite recesses 14 formed in the support body 2 and disposed therein at the opposite sides adjacent to the coupling portions. These recesses 14 of a semicircular profile are intended for being hand gripped by a user.

In the preferred embodiment (Figs. 1, 3 and 4) the support body 2 has two further coupling portions 12, 13 identical with the preceding portions so that said portions are arranged on the body itself at all sides thereof.

Likewise, in this preferred embodiment, the support body 2 has two other recesses 15 defining the grip means, so that there are four of said grip means, i.e. one at each side of the support body.

Under operating conditions the whole device is symmetric in mirror image relationship relative to a horizontal plane (the line of which is coincident with axis 10) passing through the points located half-way the distance between the grip elements 5, 8 and also symmetric relative to a vertical plane (the line of which is denoted by numeral 16 in figures 3 and 7) passing through the median point off the housing in engagement with the grip element.

In the embodiment shown in Fig. 3 the outline of the support body has bevelled connecting regions 17 between the sides. The presence of these bevelled regions is adapted to ensure a non-interference between the support body 2 and the grip elements when, under engagement condition of the same, a relative rotation is caused.

Such a device, if a clearance L is present between the side walls 6, 18 of the two pans, enables an oscillatory motion of pan 9 held within the first pan 4.

This motion can be advantageous if one wishes to mechanically (i.e. by an operator's intervention) cause a greater and quicker dripping.

If, on the contrary, one wishes to maintain the greatest steadiness and avoid any type of relative movement, the spacing device will be provided with a predetermined number of abutment portions 19 (Figs. 7 and 8) capable of preventing at least one relative rotation away from the utensils 4, 9, of body 2 relative to the grip element 5 of the first utensil 4.

This embodiment is shown in Fig. 7 where the abutment portion is defined by the absence of a bevel between two consecutive sides at least at one of the side walls defining the housings for the coupling portions 3, 7.

It is apparent that, due to the presence of two support bodies 2, that is one for each grip element 5 of the utensils, as well as to inhibition of the relative motion moving the device away from the utensils, no relative movement between the two pans is allowed, under operation conditions.

Advantageously, the whole support body 2 is made of a heat insulating material, such as wood or plastics for example. In this way the device is made adapted for use even in the case in which the pan handles 5, 8 should be at high temperature due to cooking.

A further embodiment shown in Figs. 2, 5 and 6 shows a support body 2, provided with a first coupling portion 3 adapted to also engage in a removable manner a side wall 6 of the first utensil 4.

Practically, before cooking beginning this device is joined by snap-fitting to the handle and an end portion thereof 20 abuts against the side wall 6 of the pan. In this manner the device is hooked to and integral with the first utensil 4.

The second coupling portion 7 is defined by at least two substantially V-shaped supports which are arranged to receive the grip element 8 of the second utensil 9 resting on them. Practically, a device in accordance with the last-mentioned embodiment can be obtained by suitably shaping a bar, a metal bar of round section for example, in such a manner that both the coupling portions by snap-fitting and V-shaped coupling portions can be defined, as better clarified in the drawings.

The invention achieves important advantages.

First of all it is to note that a device thus conceived enables food dripping and draining to be obtained in a simple and also very reliable manner, when the food has reached its appropriate cooking degree.

Since the device can be completely disengaged from the pan set, it has no problems of additional bulkiness and can be easily cleaned and stowed.

Due to the weak heat conductivity of the materials forming the device, use of same is allowed without employment of particular measures against heat even in the case in which the utensil grip elements are at high temperature.

Furthermore, coupling being of easy, clear and evident comprehension, operation of the device is readily understood and is at the same time very safe.

## Claims

1. A spacing device for kitchen utensils intended for cooking food, comprising:
- a support body (2) having a first coupling portion (3) adapted to be engaged in a removable manner with a first cooking utensil (4), characterized in that said support body (2) has a second coupling portion (7) intended for removable engagement at least with a grip element (8) of a second kitchen utensil (9), said device being capable, under engagement conditions of the coupling portions (3, 7) with the utensils (4, 9), of maintaining a predetermined distance (H) between a bottom wall (21) of the first utensil (4) and a bottom wall (22) of the second utensil (9).

2. A spacing device as claimed in claim 1, characterized in that the first coupling portion (3) is intended for removable engagement at least with one grip element (5) of the first kitchen utensil (4).

3. A device as claimed in claim 1, characterized in that the support body (2) has a substantially rectangular, and preferably square outline, said first and said second coupling portions (3, 8) being disposed at the opposite sides.

4. A device as claimed in claim 2, characterized in that the coupling portions (3, 7) are defined by respective housings (23) the shape of which matches that of a rest portion (24; 25) of the corresponding grip element (5, 8).

5. A device as claimed in claim 1, characterized in that the first and second coupling portions (3, 7) are identical with each other and disposed symmetrically relative to a median axis (10) of the support body (2), said axis being disposed horizontally in an engagement condition of the coupling portions with the utensils.

6. A device as claimed in claim 1, characterized in that the support body (2) is made of a heat insulating material, preferably wood or plastics.

7. A device as claimed in claim 1, characterized in that under engagement conditions of the coupling portions with the utensils, the second utensil (9) is at least partly held within the first utensil (4).

8. A device as claimed in claim 3, characterized in that the support body (2) has further coupling portions (12, 13) disposed on the body itself (2) at the other opposite sides.

9. A device as claimed in claims 2 and 3, characterized in that the outline of the support body (2) has bevelled connecting regions (17) between the sides, to allow a relative rotation between the support body (2) and the grip element (5; 8).

10. A device as claimed in claim 3 or in claim 8, characterized in that the housings (23) defining the coupling portions (3, 7) extend longitudinally over the whole length of the support body (2).

11. A device as claimed in claim 1, characterized in that it further comprises grip means (11) defined by at least two, and preferably four, opposite recesses (14, 15) formed in the support body (2).

12. A device as claimed in claim 2, characterized in that the support body (2) has a predetermined number of abutment portions (19) for inhibiting at least one relative rotation of the body itself (2) away from the utensils (4, 9) with respect to the grip element (5) of the first utensil (4).

13. A device as claimed in one or more of the preceding claims, characterized in that the device is symmetric relative to a median axis of the support body, said axis being disposed horizontally in a condition of engagement of the coupling portions with the utensils.

14. A device as claimed in claim 2, characterized in that the first coupling portion (3) is intended for removable engagement also with a side wall (6) of the first utensil (4), the second coupling portion (7) being defined by at least two V-shaped supports adapted to receive the grip element (8) of the second utensil (9) resting thereon.

15. A device as claimed in one or more of the preceding claims, characterized in that it comprises two support bodies, one for each grip element (8) of the second utensil (9).
